Europäisches Patentamt

European Patent Office

Office européen des brevets

(11) Veröffentlichungsnummer: **0 455 115 A2**

# EUROPÄISCHE PATENTANMELDUNG

(21) Anmeldenummer: **91106560.5**

(22) Anmeldetag: **24.04.91**

(51) Int. Cl.5: **B09B 3/00**

(30) Priorität: **30.04.90 DE 4013969**

(43) Veröffentlichungstag der Anmeldung:
**06.11.91 Patentblatt 91/45**

(84) Benannte Vertragsstaaten:
**AT BE CH DE DK ES FR GB GR IT LI LU NL SE**

(71) Anmelder: **Roland, Rolf Emil**
**Kantstrasse 10**
**W-6668 Illingen/Saar(DE)**

(72) Erfinder: **Roland, Rolf Emil**
**Kantstrasse 10**
**W-6668 Illingen/Saar(DE)**

(74) Vertreter: **Klöpsch, Gerald, Dr.-Ing.**
**Patentanwälte Klöpsch & Flaccus et al**
**An Gross St. Martin 6**
**W-5000 Köln 1(DE)**

(54) Verfahren und Vorrichtung zum Rückgewinnen von Bestandteilen aus umweltgefährdende Stoffe enthaltenden Dosen, insbesondere aus Treibmittel enthaltenden Sprühdosen.

(57) Bei einem Verfahren zur Materialwiedergewinung und/oder Entsorgung von Wirkstoffe enthaltenden luftdicht verschlossenen Dosen oder dergleichen, insbesondere Treibmittel enthaltenden Sprühdosen oder dergleichen, werden die Dosen in einem Kältebad tiefgefroren, in vorausbestimmter definierter Weise zertrennt und anschließend die Einzelteile nach unterschiedlichen Materialien sortiert und gesammelt, so das sie einer Wiederverwendung oder Ensorgung zugeführt werden können.

EP 0 455 115 A2

Die Erfindung betrifft ein Verfahren sowie eine Vorrichtung zur Wiedergewinnung von im Abfall oder Schrott enthaltenen Wertstoffkomponenten, insbesondere bei der Entsorgung von luftdicht verschlossenen und Treibmittel enthaltenden Sprühdosen, Hohlkörpern oder dergleichen, wobei diese aufbereitet und dabei zunächst zerkleinert und sodann das zerkleinerte Gut in die unterschiedlichen Komponenten getrennt und diese fallweise einer Wiederverwendung oder Entsorgung zugeführt werden.

Im Zuge der Bemühungen, Umweltschäden soweit wie möglich zu vermeiden bzw. gering zu halten, gewinnt die gezielte Beseitigung und gegebenenfalls Vernichtung, insbesondere aber die Wiederverwendung der Materialien und Stoffe fehlbeschickter oder mit einem sonstigen zum Aussondern aus dem Produktions- bzw. aus dem Verbrauchsprozeß zwingenden Fehler behafteten, ebenso aber auch bereits benutzter und dabei verbrauchter Gegenstände wie Dosen oder sonstiger entsprechender Behältnisse zunehemend an Bedeutung. Dies erweist sich insbesondere dann als nicht immer einfach, wenn es sich um Gegenstände aus und/ oder mit sehr unterschiedlichen Materialien bzw. Stoffen wie beispielsweise mit Treibmittel betriebene Spraydosen oder dergleichen Behälter handelt. Erschwerend ist hierbei u.U. die Art der in den Behältnissen befindlichen Stoffe, da diese zum großen Teil leichtflüchtig und/oder toxisch sind, so daß strenge gesetzliche Auflagen hinsichtlich der Behandlung als Sondermüll zu beachten sind. Insbesondere dort, wo beispielsweise überlagerte Bestände beseitigt werden müssen oder wo es innerhalb dse Produktions- bzw. Abfüllverfahrens zu Fehlchargen gekommen ist, ist Handel und Gewerbe häufig von sehr hohen Sondermüllentsorgungskosten betroffen. Aus der DE - OS 30 22 695 ist ein Verfahren und eine Vorrichtung zum Aufbereiten, vorzugsweise Oberflächenreinigen verformbarer Hohlkörper bekannt, mit denen erreicht werden soll, derartig äußerlich verschmutzte Teile für ein Recycling optimal verwendbar zu machen. Zur Lösung dieser Aufgabe wird in überraschend einfacher Weise vorgeschlagen, daß die Hohlkörper nacheinander eine Prallphase, eine Aufreißphase und eine Verdichtungsphase durchlaufen, wobei die derart behandelten Hohlkörper in einem steuerbaren Teilstrom rückgeführt und dem Aufgabegut wieder zugesetzt werden. Das Verfahren eignet sich besonders vorteilhaft für die Aufbereitung lackierter und gegebenenfalls schmutzbehafteter, aus Abfall aussortierter und/oder aus der Produktion ausgeschiedener Weißblechdosen, wobei die rückgeführten , behandelten bzw. zerkleinerten und verdichteten Weißblechdosen den unbehandelten Weißblechdosen während der Prallphase zugesetzt werden. Dies ergibt eine Erhöhung des Behandlungseffektes, da die Teile des Teilstroms aufgrund ihres höheren spezifischen Gewichtes geschoßartig auf die Teile des Aufgabegutes einwirken und dort reinigend wirken.

Der aus dieser Vorveröffentlichung erkennbare Stand der Technik enthält ganz allgemein die Lehre, daß zur Wiedergewinnung von in Abfall oder Schrott enthaltenen Wertstoffkomponenten das Gut zunächst zerkleinert, sodann in die unterschiedlichen Komponenten getrennt und diese fallweise einer Wiederverwendung oder Entsorgung zugeführt werden. Für die spezielle Entsorgung von luftdicht verschlossenen und Treibmittel enthaltenden Sprühdosen oder Hohlkörpern ist das Verfahren wegen der flüchtigen Inhaltsstoffe jedoch nicht geeignet.

Durch die DE-AS 25 40 673 ist eine Vorrichtung zum Abtrennen von Staub und Leichtstoffen bekannt, bei der zwecks Erzeugung von Qualitätsschrott aus Karosserie- oder Leichtschrott, der in einer Zerkleinerungsvorrichtung zerkleinerte Schrott in einer anschließenden Abtrennvorrichtung in seine metallischen und nichtmetallischen Bestandteile getrennt wird. Dabei wird das zerkleinerte Material in einem Luftstrom mit hoher Geschwindigkeit aus der Ausführungsöffnung der Zerkleinerungsvorrichtung nahezu horizontal in das Gahäuse der Abtrennvorrichtung befördert, wo es - abgesehen von einen Teil, der unmittelbar auf ein unterhalb des Gehäuses angeordnetes Förderband fällt - auf eine gegenüberliegende Prallplatte auftrifft und dann entgegen einen von unten ins Gehäuse eingeführten und oben aus dem Gehääuse abgeführten Luftstrom auf das Förderband abfällt, wobei die leichten Bestandteile des zerkleinerten Materialstroms vom Luftstrom nach oben mitgenommen und durch eine Luftaustrittsöffnung oben aus dem Gehäuse entfernt werden.

Durch die DE-OS 34 12 767 ist es auch bekannt, verbrauchte Entladungslampen zu vernichten und zu entsorgen, indem diese zerkleinert und dem Glasbruch zur Neutralisierung der umweltbelastenden Substanzen wie Quecksilber, Natrium und Schwermetalle ein Neutralisierungsmittel, beispielsweise Schwefel, zugeführt wird.

Die DE-OS 30 18 795 beschreibt weiterhin eine Vorrichtung zur gefahrlosen Entladung von Spraydosen, bei denen sich beim Befüllen und Verschließen Undichtigkeiten zeigen, so daß diese aus dem Bearbeitungsprozeß ausgeschleust und anschließend zerstört werden müssen, wobei das Treibgas beseitigt und der Wirkstoff wieder gewonnen werden soll.

Mit einer Vorrichtung zum Beseitigen von Behältern, welche Aerosole oder Treibmittel, entflammbare Gase oder giftige Chemikalien enthalten, befasst sich die US-PS 4,356,981. Die Behälter werden dabei in einem Schredder zerstört, wobei die Restbestandteile nach unten auf ein perforiertes Förderband fallen, welches innerhalb eines nach außen im wesentlichen abgedichteten Gehäuses angeordnet ist, durch das eine Luftströmung geleitet wird. Während die flüssigen Restbestandteile durch die Löcher im Förderband nach unten abtropfen und in einer Wanne aufgefangen werden, werden die gasförmigen Bestandteile zusammen mit in das Gehäuse eingeleiteter Luft über ein Druckgebläse kontrolliert abgeführt. Da die mechanische Zerkleinerung der Behälter in sauerstoffhaltiger Atmosphäre stattfindet, die flüssigen und/oder gasförmigen Bestandteile jedoch giftig und/oder leicht entzündlich sein können, ist die Arbeit mit dieser Vorrichtung nicht unproblematisch.

Eine verbesserte Vorrichtung zur gefahrlosen und umweltfreundlichen Zerkleinerung und Beseitigung von Behältern, insbesondere von unter Druck stehenden Metalldosen, welche Treibmittel und/oder Restprodukte enthalten, ist aus der DE-PS 37 13 477 bekannt. Diese Vorrichtung weist einen luftdicht abgeschlossenen Arbeitsraum auf, in welchem motorangetriebene Zerkleinerungswerkzeuge angeordnet sind und welcher an seiner Oberseite eine luftdicht verschlossene Schleuse aufweist sowie an seiner Unterseite luftdicht mit einem Abfallcontainer verbunden ist. Der Arbeitsraum ist ferner mit einer Einlaßöffnung für Stickstoff versehen und an eine Abgasleitung angeschlossen.

Während des Betriebs soll im Arbeitsraum stets eine inerte Stickstoff-Atmosphäre mit leichtem Überdruck gegenüber der Umgebung aufrechterhalten werden, so daß die dem Arbeitsraum mittels einer Fördereinrichtung über die Schleuse zyklisch zugeführten Behälter, selbst wenn es sich dabei um unter hohem Innendruck stehende Metalldosen mit hoch brennbarem Inhalt handelt soll, trotz kaum vermeidbarer Funkenbildung durch die Zerkleinerungswerkzeuge gefahrlos mechanisch verkleinert werden können, da die im Arbeitsraum vorhandene inerte Atmosphäre zuverlässig jede Gefahr einer Selbstentzündung auch bei schlagartig aus den zerplatzenden Dosen entweichendem Inhalt verhindern soll. Dabei ist vorgesehen, die bei der Zerkleinerung anfallenden festen Bestandteile im Abfallcontainer und eventuell vorhandene flüssige Bestandteile in einem Sumpf am Boden des Containers zu sammeln, während eventuelle gasförmige Bestandteile über die Abgasleitung abgeführt werden.

Trotz der gefahrlosen Zerstörung bzw. Zerkleinerung verbrauchter Behältnisse befriedigt diese Vorrichtung nicht, da die Behälter samt ihren Verschlüssen und ihrem Inhalt zunächst verhältnismäßig wahllos, d.h. nicht nach ihren einzelnen Bestandteilen bzw. Materialien getrennt zerkleinert werden und dementsprechend auch keine Trennung der einzelnen Bestandteile bzw. Materialien im Sinne einer Wiederverwertung insbesondere des Doseninhalts erzielt wird.

Der vorliegenden Erfindung liegt daher die Aufgabe zugrunde, ein wiederverwertungs- und/oder entsorgungsgerechtes Öffnen von fehlbeschickten oder mit einem sonstigen zur Aussonderung aus dem Produktions- bzw. Verbrauchszyklus zwingenden Fehler behafteten, ebenso aber auch von bereits benutzten und dabei praktisch verbrauchten Behältnissen, wie unter dem Druck eines Treibmittels betriebenen Sprühdosen oder dergleichen zu ermöglichen, wobei eine weitgehende Separierung nach Dosenmaterialien, Treibgas und Inhaltsstoffen gewährleistet sein soll, so daß insbesondere eine weitere Aufarbeitung nach kundenspezifischen Anforderungen im Produktions- oder Abfüllbetrieb möglich ist.

Diese Aufgabe wird gelöst mit einem Verfahren gemäß Anspruch 1 und einer Vorrichtung gemäß Anspruch 4. Zweckmäßige weitere Ausgestaltungen der Erfindung sind in den Unteransprüchen beschrieben.

Dadurch, daß die einzelnen Behältnisse in stets gleicher geordneter Weise angeordnet und während des Öffnens und Trennens weitertransportiert werden, ist es in gezielter Weise möglich, jeden einzelnen Behälter in genau der gleichen Art und Weise zu bearbeiten, d.h. in eine entsprechende Anzahl gleicher Teile zu zerlegen und diese dann art- und stoffgerecht vorzugsweise einer Wiederverwertung, zumindest aber einer Entsorgung zuzuführen. Durch das vorübergehende Einfrieren des Inhaltes der Behälter wird zum einen sichergestellt, daß die gesamten Arbeitsvorgänge gefahrlos vollzogen werden können, zum anderen das Loslösen des gefrorenen Inhalts von der Wandung des Behälterhauptteils zu einem bestimmten Zeitpunkt an der dafür vorgesehenen Stelle stattfindet, so daß der bis auf die Kontaktbereiche zum Behälter gefrorene Inhalt als Ganzes gezielt und ohne Gefahr für die Umwelt in einen dafür geeigneten Behälter aufgefangen und seiner weiteren Bestimmung zugeführt werden kann.

Die gesamte Trennvorrichtung befindet sich - mit Ausnahme des Drehtischs und eines Teils des an diesen anschließenden Transportbandes - in einem geschlossenen Gehäuse, welches sich gegebenenfalls unter einer inerten Atmosphäre befindet, die aus dem durch den Einfriervorgang verdampfenden Stickstoffbad bzw. durch kontinuierliche Stickstoffzuführung in dem erforderlichen Maße gebildet und mittels eines Sauerstoffdetektors in geeigneter Weise gegebenenfalls auf den Sauerstoffgehalt überwacht wird.

Der umgewälzte Stickstoff dient gleichzeitig als Trägermedium für eventuell bei Dosenöffnung freiwerdende Gase, die gegebenenfalls durch eine Kondensationsvorrichtung, vorzugsweise eine Mehrfachkondensationsvorrichtung wegen des hohen Mitnahmeeffektes, zurückgewonnen werden. Der nach Auskondensieren von den freiwerdenden Gasen verbleibende Stickstoff wird in das Inertsystem zurückgeführt.

Als Kältemedium für die Kondensationssäulen wird flüssiger Stickstoff einer Temperatur von minus 196°C verwendet.

Das Kältebad, das zum Einfrieren des Doseninhaltes dient, kann sowohl mit flüssigem Stickstoff als auch mit flüssigem Kohlendioxid - abhängig von der Art des auszufrierenden Doseninhalts - beschickt werden.

Das erfindungsgemäße Verfahren und die Vorrichtung der Erfindung ermöglichen es in vorteilhafter Weise, nach einfachen Handversuchen durch den mit der Art der Doseninhaltsstoffe vertrauten Fachmann, z.B. aus dem Abfüll- bzw. Produktionsbereich, die Verweilzeit, die für das erfindungsgemäße Verfahren erforderlich ist, entsprechend dem Siedepunkt des verwendeten Treibgases festzulegen und eventuell zusätzlich erforderliche Maßnahmen, beispielsweise Sicherheitsmaßnahmen, zur weiteren Handhabung der separat aufgefangenen Inhaltsstoffe zu ergreifen. Das Verfahren und die Vorrichtung sind für alle handelsüblichen Treibgase bzw. Treibgasgemische wie Propan, Butan, Propan/Butan, Fluorkohlenwasserstoffe, Fluorchlorkohlenwasserstoffe, Dimethylether, Distickstoffmonoxid u.s.w. verwendbar.

Das Spektrum der möglichen in dem Treibgas befindlichen Inhaltsstoffe umfasst selbst so unterschiedliche Doseninhalte wie Schäume der verschiedensten Art, Schuhcreme, Farbe, pharmazeutische Wirkstoffe, Lebensmittel, technische Trennmittel u.s.w. und unterliegt in anwendungstechnischer Hinsicht keiner Beschränkung.

Für den mit der Entsorgung Konfrontierten hat das mit der erfindungsgemäßen Vorrichtung durchzuführende verfahren den wesentlichen Vorteil, daß er, ohne mit hohen Kosten für Sondermüllentsorgung sowie Roh- und Werkstoffverlust belastet zu sein, die gesetzlichen Entsorgungsvorschriften durch Einsatz der Vorrichtung, insbesondere als transportable Recyclinganlage, erfüllen kann. In gleicher Weise kann der Abfüller oder Produzent die Aufarbeitung von Fehlchargen mittels der erfindungsgemäßen vorteilhaftertweise transportablen Vorrichtung und des damit durchzuführenden Verfahrens innerhalb des Abfüll- bzw. Produktionsprozesses betreiben, wobei nicht nur eine Kostenbelastung für Sondermüllentsorgung entfällt, sondern darüber hinaus kein Verlust des oft wertvollen Doseninhalts eintritt, da dieser ebenso wie das Treibgas in reiner Form zurückgewonnen und wieder in den Produktionsprozess eingeschleust werden kann. Entsprechendes gilt in hohem Maße selbstverständlich auch für die Rückgewinnung und gegebenenfalls Wiederverwendung des bzw. der Dosen- und Behälterwerkstoffe.

Die Erfindung ist in der Zeichnung in einem Ausführungsbeispiel schematisch dargestellt und wird anhand dessen im folgenden erläutert:
Es zeigen:

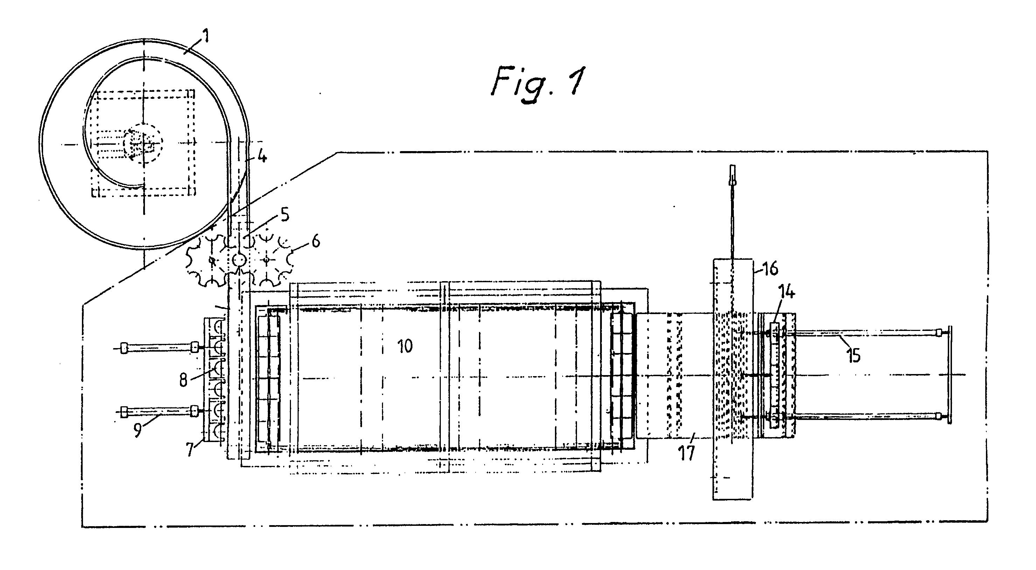

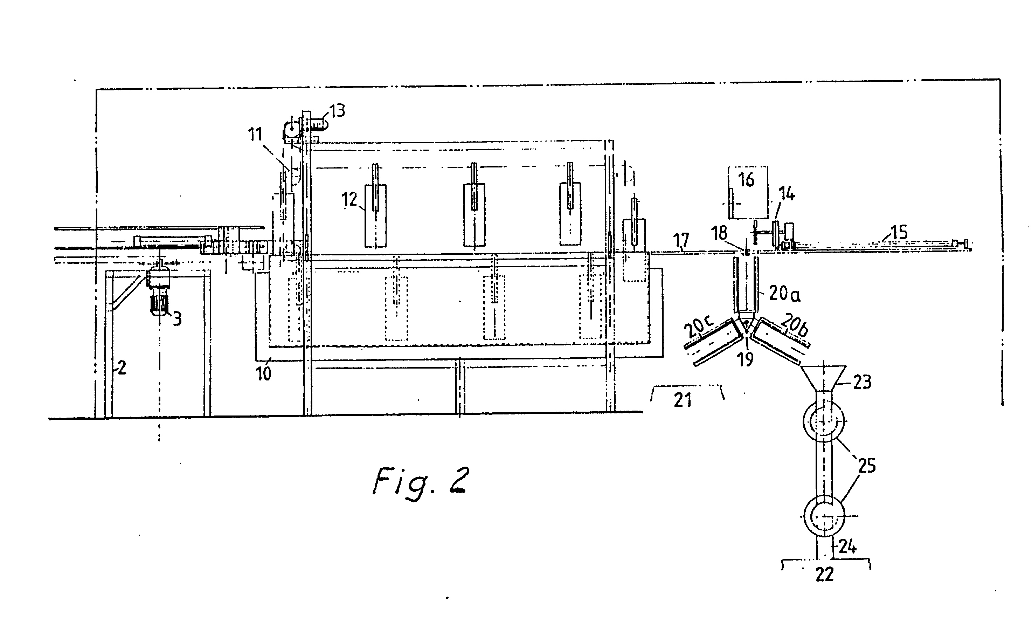

Fig. 1 die erfindungsgemäße Anlage in einer Draufsicht und Fig. 2 die Einrichtung der Fig. 1 in einer Ansicht, teilweise im Schnitt.

Der an sich bekannte und beispielsweise in der Getränkeindustrie allgemein gebräuchliche Verteiler-Drehtisch 1 ist auf der Konsole 2 abgestützt und wird durch den Motor 3 betrieben. An das ausgangsseitige Ende 4 des Verteiler-Drehtisches 1 schließt sich das Endlos-Umlaufförderband 5 an. Im Bereich des Übergangs vom Verteiler-Drehtisch 1 zum Endlos-Umlaufförderband 5 ist die Sternradschleuse 6 vorgesehen. Quer zum Endlos-Umlaufförderband 5 ist die Aufnahme- und Transportleiste 7 angeordnet, die hier beispielsweise mit sechs Aufnahmetaschen 8 für die Dosen oder dergleichen versehen ist. Die Betätigung der Transportleiste 7 erfolgt über die Zylinder-Kolben 9 quer zum Endlos-Umlaufförderband 5.

In dem mit flüssigem Stickstoff oder auch Kohlendioxid gefüllten Behälter 10 ist das paternosterartig ausgebildete und umlaufende Förderband 11 angeordnet, das eine Anzahl von Aufnahmebehältern 12 aufweist. Der Antrieb des Förderbandes 11 erfolgt über den Motor 13. Die Anordnung und Ausbildung des Förderbandes 11 samt Aufnahmebehältern 12 ist so getroffen, daß die Aufnahmebehälter 12, zumindest aber deren Inhalte in abgesenkter Stellung völlig in das Kältebad eingetaucht sind.

An dem von Drehtisch 1 abgewandten Ende des Behälters 10 ist die mittels der Zylinder-Kolben 15 betätigbare Entnahme- und Transportvorrichtung 14 vorgesehen, mit welcher die Schneidvorrichtung 16 zusammenarbeitet. In der Verschiebeplatte 17 ist der querverstellbare Schieber 18 angeordnet. Unterhalb des Schiebers 18 ist die mit den drei Armen 20a, b und c als Stern ausgebildete Verteileinrichtung 19 angebracht. Mit 21 ist ein Container für die Dosen und mit 22 ein Behälter für die Doseninhaltsstoffe bezeichnet. Der Behälter 22 ist an seiner Oberseite dicht verschlossen und über das mit den gasdichten Absperrvorrichtungen 25 versehene Rohr 24 an den Trichter 23 angeschlossen.

Die Arbeitsweise der Vorrichtung ist wie folgt:
Die nicht gezeigten Dosen werden in aufrechter Stellung auf den Drehtisch 1 aufgegeben und von diesem dann in Hintereinanderanordnung zum Endlos-Umlaufförderband 5 transportiert. Die Sternradschleuse 6 sorgt dafür, daß die Dosen in gleichmäßigen Abständen hintereinander auf dem Förderband 5 weitertransportiert werden. Sobald sechs Dosen vor die Aufnahmetaschen 8 der Transportleiste 7 gelangt sind, wird letztere mittels der Zylinder-Kolben 9 nach rechts verschoben und werden dadurch die Dosen in einen der Aufnahmebehälter 12 eingebracht. Durch das sich entgegen dem Uhrzeigersinn drehende Förderband 11 wird dieser Aufnahmebehälter 12 zunächst abwärts und dann in völlig eingetauchtem Zustand durch das Kältebad nach rechts transportiert, wo er wieder aus den Kältebad austritt, wobei die Dosen genügend lange Zeit in das Kältebad eingetaucht sind und dabei ihr Inhalt völlig eingefroren wird.

Die mit dem Aufnahmebehälter 12 aus dem Kältebad austretenden Dosen werden mittels der Entnahme- und Transportvorrichtung 14 aus dem Behälter 12 entnommen und nach rechts über den Schieber 18 und unter die Schneidvorrichtung 16 gebracht. Die von der Vorrichtung 14 festgehaltenen Dosen werden nun mittels der Schneidvorrichtung 16 in vorbestimmter Weise zertrennt, beispielsweise der Deckel der senkrechtstehenden Dosen abgetrennt, und in nicht gezeigter Weise weggebracht. Nach Öffnen des Schiebers 18 fallen die von der Vorrichtung 14 nunmehr freigegebenen Dosen senkrecht nach unten in den nach oben gerichteten Arm 20a, wo sie festgeklemmt werden. Nach einer Drehung des Sterns 19 im Uhrzeigersinn um 120° gelangt der Arm 20a über den Trichter 23, wobei die Dosen ihren Inhalt in den Trichter 23 und über diesen sowie das Rohr 24 mit den gasdichten Schleusen 25 in den Behälter 22 entleeren. Nach einer weiteren Drehung des Sterns 19 um 120° im Uhrzeigersinn gelangt der Arm 20a über den Container 21, wobei der Arm 20a jetzt die Dosen freigibt, so daß diese in den Container 21 fallen.

Es versteht sich, daß die Arbeitsweise der einzelnen Teile der Vorrichtung so aufeinander abgestimmt ist, daß sich ein taktweiser reibungsloser fortlaufender Betrieb ergibt, bei dem sich die einzelnen Vorgänge des Zuführens, Eintauchens, Zertrennens der Dosen und Beseitigung deren Einzelteile in gleichmäßigen Zyklen ständig wiederholt. Ebenso versteht es sich, daß alle Vorkehrungen getroffen werden, daß ein Freiwerden bzw. Austreten schädlicher Flüssigkeiten, Gase oder Dämpfe mit Sicherheit vermieden wird, d.h. daß die entsprechenden Teile der Einrichtung unter einer Schutzgas- bzw. Inert-Atmosphäre gehalten sind, soweit dies erforderlich ist, beispielsweise durch eine nach außen dicht abschließende Haube in Bereich des Flüssigkeitsbades, wodurch erreicht wird, daß verdampfendes Kühlmedium, beispielsweise Stickstoff, über dem Kältebad die Inertatmosphäre bildet bzw. aufrechterhält, die selbstverständlich laufend daraufhin überwacht und so gesteuert wird, daß sie ihre Funktion jederzeit voll erfüllt.

Der Bereich der Vorrichtung rechts vom Behälter 10, in welchem das Auftrennen der Dose und das Abführen der einzelnen Bestandteile der Dose bzw. deren Inhaltsstoffe erfolgt, wird zweckmäßig ebenfalls nach außen dicht abgeschlossen und in vorteilhafter Weise mit einer Absaugvorrichtung versehen, so daß keine gasförmigen umweltbelastenden Stoffe freiwerden.

Um das Entleeren des tiefgefrorenen Behälterinhaltes zu erleichtern, wird zweckmäßig vorgesehen, daß die Dosen nach ihrem Einbringen in den aufrecht stehenden Arm 20 des Sterns der Verteileinrichtung 19 erwärmt werden, so daß sich der Inhalt der Dosen nach Drehung des Sterns um 120° und Überführung des zuvor senkrecht stehenden Arms 20 in die gezeigte rechte Schräglage leicht vom Dosenmaterial löst und in den Trichter 23 fällt. Das Erwärmen der Dosen kann unmittelbar erfolgen oder aber mittelbar durch Zufuhr der Wärme an die Arme 20 des Sterns 19.

Anstatt wie angedeutet nur den Deckel der Dosen abzuschneiden, kann selbstverständlich auch vorgesehen werden, sowohl den Deckel als auch den Boden abzuschneiden oder aber die Dosen an anderer Stelle aufzutrennen und ggf. in mehrere mehr oder weniger große Teile zu zerschneiden. In jedem Fall wird die Vorrichtung selbstverständlich in entsprechender Weise an die jeweiligen Erfordernisse angepaßt. Dies gilt auch im Hinblick auf die Verarbeitung von Dosen unterschiedlicher Größen. Für diesen Fall werden zweckmäßig die entsprechenden Vorrichtungteile auswechselbar ausgebildet, wie beispielsweise die Räder der Sternradschleuse 6, die Aufnahme- und Transportleiste 7, die Aufnahmebehälter 12, die Entnahme- und Transportvorrichtung 14 sowie die Arme 20 des Sterns der Verteileinrichtung 19. Entsprechend der Größe der Behälter kann auch vorgesehen werden, diese Transporttleiste 7 sowie die Aufnahmebehälter 12 mit einer mehr oder weniger großen Anzahl von Dosen zu bestücken, d.h. mehr oder weniger Taschen für die Aufnahme von Dosen vorzusehen.

Um das sichere Einfrieren des Doseninhalts sicherzustellen, kann die Arbeitsgeschwindigkeit der Vorrichtung in der erforderlichen Weise eingestellt werden. Eine andere bzw. zusätzliche Möglichkeit, das sichere Einfrieren des Doseninhaltes zu gewährleisten, besteht darin, daß das Kältebad, d.h. der mit flüssigem Stickstoff oder Kohlendioxid gefüllte Behälter 10 mehr oder weniger lang ausgebildet wird, so daß die in den Aufnahmebehältern 12 befindlichen Dosen auf einer entsprechend mehr oder weniger langen Wegstrecke durch das Kältebad hindurchgeführt werden. Um zu verhindern, daß die Dosen beim Eintauchen des sie aufnehmenden Aufnahmebehälters 12 in das Kältebad "Aufschwimmen" und die ihnen zugeordnete Position verlassen, können die Dosen mittels an sich bekannter Einrichtungen in den Aufnahmebehältern 12 in geeigneter Weise fixiert werden, bis sie schließlich nach dem Austritt aus dem Kältebad bzw. Behälter 10 von der auf an sich ebenfalls bekannten Prinzipien beruhenden Festhalteeinrichtung der Entnahme- und Transporteinrichtung 14 erfasst und in der vorbestimmten Weise zur Trenneinrichtung 16 weitertransportiert werden, wo sie schließlich nach erfolgtem Trennvorgang freigegeben bzw. von den Armen 20 a, b, c übernommen und die Teile in der beabsichtigten Art und Weise in dafür vorgesehene Behältnisse 21 und 22 verbracht werden, so daß ein ungestörter Betriebsablauf sichergestellt ist.

Selbstverständlich sind auch hinsichtlich der räumlichen Anordnung und Ausbildung der erfindungsgemäßen Vorrichtung zahlreiche Varianten vorstellbar. Beispielsweise wäre es möglich, die dem Behälter 10 nachfolgenden Vorrichtungsteile anstatt in Verlängerung desselben neben diesem auf der dem Drehtisch 1 zugewandten Seite anzuordnen und auszubilden oder aber in einer anderen, vorzugsweise unterhalb des Behälters liegenden, Ebene anzuordnen.

Ebenso ergeben sich für die einzelnen Vorrichtungsteile eine Vielzahl von Möglichkeiten der Ausbildung und Anordnung. So kann es sich beispielsweise bei den Aufnahmeeinrichtungen wie Transportleiste 7, Aufnahmebehälter 12 und Armen 20 a, b, c der Verteileinrichtung 12 um solche handeln, die die Dosen verhältnismäßig weitgehend umschließen, oder aber um solche, die die Dosen nur klammerartig erfassen und festhalten. Ebenso kann es sich bei der paternosterartigen Transporteinrichtung 11 beispielsweise um ein von einem Antrieb über ein Getriebe mit veränderlicher Umlaufgeschwindigkeit angetriebenes bzw. antreibbares kettenförmiges Förderband oder auch eine andere Art einer bekannten Fördereinrichtung handeln.

Schließlich ist es möglich, die erfindungsgemäße Vorrichtung als stationäre Anlage zu konzipieren oder auch als mobile Einrichtung, sei es, um letztere innerhalb eines Unternehmens an verschiedenen Stellen einsetzen zu können, oder aber als fahrbare Einheit bei Bedarf von einem Unternehmen zum anderen verbracht zu werden, falls sich für die Unternehmen wegen zu geringer Kapazität bzw. zu geringen Aufkommens an Dosen für eine Materialrückgewinnung bzw. Entsorgung eine stationäre Anlage nicht lohnen sollte. Für die Ausbildung als mobile Einrichtung kann dann sowohl eine containerartig ortsveränderbare Baueinheit vorgesehen werden oder auch eine auf einem gegebenenfalls mit eigenem Antrieb ausgerüsteten Fahrgestell fest oder lösbar angeordnete Einrichtung.

Liste der Bezugszeichen

| | |
|---|---|
| 1. | Verteiler-Drehtisch |
| 2. | Konsole |
| 3. | Motor |
| 4. | ausgangsseitiges Ende des Drehtisches |
| 5. | Endlos-Umlaufförderband |
| 6. | Sternradschleuse |
| 7. | Aufnahme- und Transportleiste |
| 8. | Aufnahmetaschen |
| 9. | Zylinder-Kolben-Einheit |
| 10. | Behälter ($N_2$/$CO_2$) |
| 11. | Förderband |
| 12. | Aufnahmebehälter |
| 13. | Motor |
| 14. | Transportvorrichtung |
| 15. | Zylinder-Kolben-Einheit |
| 16. | Schneidvorrichtung |
| 17. | Verschiebeplatte |
| 18. | Schieber |
| 19. | Stern-Verteileinrichtung |
| 20. | Arme |
| 21. | Container |
| 22. | Behälter für Inhaltsstoffe |
| 23. | Trichter |
| 24. | Rohr |
| 25. | Absperrvorrichtung |

**Patentansprüche**

1. Verfahren zur Wiedergewinnung von im Abfall oder Schrott enthaltenen Wertstoffkomponenten, insbesondere bei der Entsorgung von luftdicht verschlossenen und Treibmittel enthaltenden Sprühdosen, Hohlkörpern oder dergleichen, wobei diese aufbereitet und dabei zunächst zerkleinert und sodann das zerkleinerte Gut in die unterschiedlichen Komponenten getrennt und diese fallweise einer Wiederverwendung oder Entsorgung zugeführt werden, dadurch gekennzeichnet, daß die Dosen in gleichmäßiger und gleichsinniger Anordnung ausgerichtet werden, dann einzeln nacheinander oder je zu mehreren gleichzeitig in ein Kältebad eingebracht und in diesem tiefgefroren werden, daraufhin in tiefgefrorenem Zustand in vorausbestimmter, definierter Art und Weise zerteilt und anschließend die Teile nach Maßgabe ihrer unterschiedlichen Materialien art- und stoffgerecht sortiert und gesammelt und einer Wiederverwendung oder Entsorgung zugeführt werden.

2. Verfahren nach Anspruch 1, dadurch gekennzeichnet, daß zumindest das Zertrennen und Sortieren unter Schutzgasatmosphäre durchgeführt wird.

3. Verfahren nach Anspruch 1 oder 2, dadurch gekennzeichnet, daß die Dosen in einem zeitlich aufeinander abgestimmten, vorzugsweise kontinuierlichen Arbeitsablauf in aufrechter Stellung in Hintereinanderanordnung und in gleichmäßigen Abständen zu den Aufnahmetaschen (8) einer Transportleiste (7), nach Befüllen vorzugsweise sämtlicher Aufnahmetaschen (8) der Transportleiste (7) mittels dieser quer zur Förderrichtung des Förderbandes (5) in einen der mehreren Aufnahmebehältern (12) eines quer zur Förderrichtung des Förderbandes (5) paternosterartig umlaufenden Förderbandes (11) eingebracht und durch dieses an der einen Seite eines mit flüssigem Stickstoff oder Kohlendioxid gefüllten Behälters (10) in diesen unter Einfrieren ihres Inhalts ein- und ausgeführt, erfasst und aus dem Aufnahmebehälter (12) des Förderbandes (11) entnommen und in einer Trenneinrichtung (16) in vorbestimmter Weise zerteilt und die Einzelteile nach Maßgabe unterschiedlicher Materialien getrennt gesammelt und dann einer Weiterverarbeitung zugeführt werden.

4. Vorrichtung zur Wiedergewinnung von im Abfall oder Schrott enthaltenen Werkstoffkomponenten, insbesondere bei der Entsorgung von luftdicht verschlossenen und Treibmittel enthaltenden Sprühdosen, Hohlkörpern oder dergleichen zur Durchführung des Verfahrens nach den Ansprüchen 1 bis 3, gekennzeichnet durch:
   - einen motorisch antreibbaren Drehtisch (1) mit einem nachgeordneten Förderband (5),
   - eine zum Förderband (5) quer verschiebbar ausgebildete und angeordnete Transportleiste (7),
   - eine der Transportleiste (7) nachgeordnete, Aufnahmebahälter (12) für die Dosen aufweisende und durch einen mit Kältemittel wie flüssigen Stickstoff oder Kohlendioxid gefüllten Behälter (10) hindurchführbar ausgebildete Transporteinrichtung (11),
   - eine schieberartig hin- und herbeweglich ausgebildete Entnahme- und Transporteinrichtung (14) mit Festhalteeinrichtung,
   - eine Trenneinrichtung (16),
   - eine der Trenneinrichtung (16) zugeordnete Verteil- und Sortiereinrichtung (19),
   - Aufnahmebehälter (21,22) für die Teile der Dosen und deren Inhaltsstoffe.

5. Vorrichtung nach Anspruch 4, dadurch gekennzeichnet, daß zwischen dem Drehtisch (1) und dem Förderband (5) eine Sternradschleuse (6) angeordnet ist.

6. Vorrichtung nach Anspruch 4 oder 5, dadurch gekennzeichnet, daß die Transportleiste (7) und jeder Aufnahmebehälter (12) mit jeweils einer gleichen Anzahl von Fächern zur Aufnahme einer entsprechenden Anzahl von Dosen ausgebildet sind.

7. Vorrichtung nach einem der Ansprüche 4 bis 6, dadurch gekennzeichnet, daß die Trenneinrichtung (16) vorzugsweise als höhenverstellbare Bandsäge ausgebildet ist.

8. Vorrichtung nach einem der Ansprüche 4 bis 7, dadurch gekennzeichnet, daß die Verteil- und Sortiereinrichtung (19) ein um eine horizontale Achse drehbarer Stern und mit drei um je 120° in Umfangsrichtung versetzt angeordneten Armen (20a, b, c) ausgebildet ist, wobei die Arme (20a, b, c) vorzugsweise eine Heizeinrichtung aufweisen.

9. Vorrichtung nach einem der Ansprüche 4 bis 8, dadurch gekennzeichnet, daß die Trenneinrichtung (16) über der Verteil- Sortiereinrichtung (19) angeordnet und zwischen diesen ein Materialrückhalteorgan (16) in Form einer verschieb- oder verschwenkbaren Klappe oder dergleichen vorgesehen ist.

10. Vorrichtung nach einem der Ansprüche 4 bis 9, dadurch gekennzeichnet, daß zumindest dem Aufnahmebehälter (22) für die Doseninhaltsstoffe eine gasdicht schließende Absperrvorrichtung (25) vorgeschaltet, und daß wenigstens der die Trenneinrichtung (16), die Verteil- und Sortiereinrichtung (19) sowie die Behälter (21, 22,) umfassende Bereich mit einer Abschirmung gegenüber der Umgebungsluft sowie mit Mitteln zur Ausbildung einer Schutzgasatmosphäre ausgebildet und vorzugsweise in diesem Bereich eine Absaugvorrichtung für die Doseninhaltsstoffe vorgesehen ist.

11. Vorrichtung nach einem der Ansprüche 4 bis 10, dadurch gekennzeichnet, daß mit Ausnahme der Aufgabestelle für die Dosen die gesamte übrige Vorrichtung mit einer Abschirmung gegenüber der Umgebungsluft sowie mit Mitteln zur Ausbildung einer Schutzgasatmosphäre ausgebildet ist.

12. Vorrichtung nach einem der Ansprüche 4 bis 11, dadurch gekennzeichnet, daß sie als mobile, vorzugsweise fahrbare Einrichtung ausgebildet ist.

Fig. 1

EP 0 455 115 A2

Fig. 2